# NEUE EUROPÄISCHE PATENTSCHRIFT

(11) **EP 0 771 941 B2**
(45) Veröffentlichungstag und Bekanntmachung des Hinweises auf die Entscheidung über den Einspruch: **07.12.2005**
(45) Hinweis auf die Patenterteilung: 02.04.2003
(21) Anmeldenummer: 96115269.1
(22) Anmeldetag: 24.09.1996
(51) Int. Cl.: F02B 31/00, F02F 1/42, F01L 3/06

(54) **Zylinderkopf für Brennkraftmaschine**
Internal combustion engine cylinder head
Culasse pour moteur à combustion interne

(30) Priorität: 30.10.1995 DE 19540398
(43) Veröffentlichungstag der Anmeldung: 07.05.1997
(73) Patentinhaber: DaimlerChrysler AG, 70567 Stuttgart (DE)
(72) Erfinder: Kutschera, Immanuel, 70327 Stuttgart (DE); Engel, Ulrich, 73207 Plochingen (DE); Vethacke, Bernward, 73240 Wendlingen (DE); Engels, Hartmut, 72649 Wolfschlugen (DE); Mumm, Claus, 70376 Stuttgart (DE); Mutterer, Martin, 71397 Leutenbach (DE)

(56) Entgegenhaltungen:
- EP-A- 0 584 564
- DD-A- 234 998
- DE-A- 3 141 663
- FR-A- 757 317
- GB-A- 931 751
- GB-A- 1 568 302
- JP-A- 2 301 618
- JP-A- 5 098 972
- US-A- 4 974 566

## Beschreibung

Die Erfindung betrifft einen Zylinderkopf für Brennkraftmaschinen, insbesondere Dieselmotoren mit Direkteinspritzung, der im Oberbegriff des Anspruchs 1 angegebenen Gattung.

Bei schnellaufenden, direkteinspritzenden Dieselmotoren, die vorwiegend in Personenkraftwagen und Lastkraftwagen eingesetzt werden, ist zur Gemischaufbereitung und Homogenisierung im Brennraum eine Drallströmung um die Zylinderhochachse erforderlich. Damit die Verbrennungsluft einen solchen Drall erhält, wird die Richtung des Einlaßkanals entsprechend gewählt oder eine exzentrische Anfasung am Einlaßventil vorgesehen.

Aus der GB-A-931 751 ist ein Zylinderkopf mit ist zwei Einlaßventilen und zwei Auslaßventilen je Zylinder sowie einer Einrichtung zur Erzeugung einer Drallströmung um die Zylinderhochachse bekannt. Der Zylinderkopf weist eine Querachse auf, auf deren einer Seite die Einlaßventile und auf deren anderer Seite die Auslaßventile angeordnet sind. Zur Erzeugung der Drallströmung um die Zylinderhochachse ist ein Einlaßkanal derart ausgebildet, daß die durch den Einlaßkanal in den Zylinder einströmende Luft bereits im Einlaßkanal die Richtung der später im Zylinder gewünschten Drallströmung erhält.

Aus der GB-A-1 568 302 ist eine Brennkraftmaschine bekannt, bei der die Ventile im Zylinderkopf V-förmig angeordnet sind. Durch eine extrem starke Neigung der Ventile wird erreicht, daß deren der Zylinderwandung benachbarter Bereich bereits bei einem geringen Ventilhub das Ventil öffnet, wohingegen der Bereich des Ventils, der der Zylinderhochachse benachbart ist, aufgrund des schrägen Ventilsitzes abgedeckt ist. Erst kurz vor Erreichen des maximalen Ventilhubes wird an diesem der Zylinderhochachse benachbarten Bereich ein Spalt zum Durchtritt der Verbrennungsluft freigegeben. Mit der bekannten Konstruktion wird erreicht, daß die in den Brennraum eintretende Verbrennungsluft parallel zur Zylinderhochachse entlang der Zylinderwand geführt wird. Auf diese Weise soll ein Kurzschluß der Strömung vom Einlaßventil zum Auslaßventil vermieden werden.

Bei der bekannten Anordnung ist eine extreme Neigung der Ventile von etwa 45° bezogen auf die Zylinderlängsachse notwendig, um die gewünschte Funktion zu gewährleisten. Eine solche Anordnung ist bei vielen Motoren aus Gründen des Bauraums und verschiedener, durch die Motorbauart vorgegebener Bedingungen nicht realisierbar. Dies gilt insbesondere für Motoren, die pro Zylinder zwei Einlaßventile besitzen.

Aus der DD-A-234 998 ist ein Zylinderkopf mit einem Einlassdrallkanal für Dieselmotoren mit Direkteinspritzung bekannt. Dabei soll das natürliche Drallverhalten des Einlaßdrallkanals dahingehend beeinflußt werden, daß sich eine etwa konstante Drallzahl über dem Ventilhub ergibt und auch die maximale Drallzahl abänderbar ist. Hierzu wird in der genannten Druckschrift vorgeschlagen, an dem Einlaßventil eine exzentrisch zur Ventilachse verlaufende Sichelfase anzuordnen, die etwa über die Hälfte des Umfangs des Ventils reicht. Über den verbleibenden Teil des Umfangs des Ventils soll eine kleine, zentrische Anfasung vorgesehen werden.

Bei dieser bekannten Anordnung wird im Anfangsbereich des Ventilhubs über den gesamten Umfang ein gleichmäßiger Spalt gebildet, so daß zunächst eine über den gesamten Ventilumfang gleich große Durchströmung erfolgt. Im weiteren Verlauf des Ventilhubs wird dann durch die exzentrische Anfasung ein größerer Austrittsspalt in diesem Bereich gebildet. Diese erst ab einem bestimmten Ventilhub wirksame Strömungsbeeinflussung ist zur Erzeugung eines ausreichenden Dralls nicht geeignet.

In der US-A-2 768 618 ist ein Zylinderkopf für eine Brennkraftmaschine beschrieben, der ein gegenüber der Längsachse des Zylinders schräg angeordnetes Einlaßventil besitzt. Aufgrund der Schrägstellung befindet sich ein Abschnitt des Ventilsitzes nahe der den Brennraum begrenzenden Kontur, wohingegen ein anderer Abschnitt des Ventilsitzes etwas weiter innen im Zylinderkopf liegt. Das hat zur Folge, daß insbesondere bei geringem Ventilhub die Verbrennungsluft bevorzugt durch den Abschnitt, der dem Brennraum näher liegt, in den Brennraum einströmt, so daß die Strömung einen Drall um die Zylinderhochachse erhält.

Bei der bekannten Anordnung ist die Stärke des Dralls im wesentlichen von der Neigung des Einlaßventils abhängig, d. h. bei geringer Neigung erfolgt das Einströmen der Verbrennungsluft in der Vorzugsrichtung lediglich über einen kurzen Ventilhub, so daß der gewünschte Drall nicht bzw. nur unzureichend erzeugt wird. Der Schrägsitz der Ventile ist jedoch meistens von Einbaubedingungen abhängig, die durch Anordnung und Lage der Zuströmkanäle, Nockenwelle, Kühlmittelkanäle und dergleichen bestimmt ist.

In der DE-C-478 415 ist ein Zylinderkopf mit einem Einlaßventil beschrieben, wobei an der einem Einlaßkanal entfernt liegenden Seite am Ventilsitz des Einlaßventils eine Anfasung vorgesehen ist, durch die einströmende Verbrennungsluft eine bevorzugte Richtung erhält.

Bei der bekannten Anordnung erzeugt die Anfasung eine bevorzugte Einströmung in dem Zylinderraum, da bei geringem Öffnungshub des Ventils der Strömungsquerschnitt auf der Seite der Anfasung wesentlich größer ist als im Bereich des Ventils ohne Anfasung. Bei Zylinderköpfen mit zwei Einlaßventilen ist die bekannte Anordnung nicht realisierbar, da die aus den Anfasungsbereichen in den Zylinder eintretenden Strömungen einen entgegengesetzt gerichteten Drall hätten, deren Strömungsvektoren sich im wesentlichen aufheben.

Der vorliegenden Erfindung liegt die Aufgabe zugrunde, einen Zylinderkopf für Brennkraftmaschinen der im Oberbegriff des Anspruchs 1 angegebenen Gattung derart auszubilden, dass sich im Zylinder nacheilende Teilströme bilden, die sich gegenseitig in der Drallwirkung verstärken.

Diese Aufgabe wird durch einen Zylinderkopf für Brennkraftmaschinen mit den Merkmalen des Anspruchs 1 gelöst.

Die Vorteile der Erfindung sind insbesondere darin zu sehen, daß insbesondere bei kleinen Ventilhüben an beiden Einlaßventile eine bevorzugte Einströmrichtung in den Brennraum erzeugt wird, deren Strömungsvektoren - bezogen auf den Zylinderkopfboden - im wesentlichen entgegengesetzt in den Brennraum verlaufen. Die durch die Ventile einströmenden Teilströme eilen einander nach, so daß sie sich gegenseitig in der Drallwirkung unterstützen. Bei Durchtritt durch das Ventil ist keine nennenswerte Einströmungskomponente ohne Drall gegeben, da nur Strömungsanteile in den Zylinderströmen können, die die Hauptdrallrichtung unterstützen.

Gemäß einer bevorzugten Weiterbildung des Erfindungsgegenstandes beträgt die Höhe der Sitzabdeckung mindestens etwa 50% des maximalen Ventilhubs. Auf diese Weise wird sichergestellt, daß zunächst die Verbrennungsluft an dem Einlaßventil, das in Drallrichtung gesehen nachgeordnet ist, ausschließlich in Richtung auf die Zylinderwandung erfolgt und nicht in Richtung auf die Zylindermitte. Erst in einem späteren Abschnitt des Ventilhubs wird dann ein geringer Strömungsanteil zur Zylindermitte hin möglich. Damitjedoch dieser Strömungsanteil die gesamte Strömung in Hauptdrallrichtung unterstützt, ist es zweckmäßig, an dem Ventilsitz des in Drallrichtung nachgeordneten Ventils eine Anfasung vorzusehen, die auf das benachbarte Einlaßventil gerichtet ist. Diese Anfasung ist wesentlich kleiner ausgebildet als die Anfasung des vorderen Einlaßventils.

Als besonders geeignet wird angesehen, daß die Anfasung des in Drallrichtung vorderen Einlaßventils sich über einen Bogenwinkel von ca. 240° erstreckt und mit ihrer größten Breite auf das benachbarte Auslaßventil gerichtet ist. Auf diese Weise ergibt sich eine Hauptströmung, die bogenförmig um die Zylinderhochachse verläuft. Die Anfasung des in Drallrichtung nachgeordneten Einlaßventils weist dagegen lediglich einen Bogenwinkel von ca. 90° auf.

Bei Vierventilmotoren ist es außerdem vorteilhaft, daß die zwei Auslaßventile je Zylinder jeweils eine dem benachbarten Einlaßventil zugewandte Anfasung aufweisen. Eine besonders vorteilhafte Ausgestaltung der Anfasungen besteht darin, daß die Anfasung des in Drallrichtung vorderen Einlaßventils und des benachbarten Auslaßventils aneinandergrenzen und zwischen sich einen stegartigen Übergangsbereich bilden. Auf diese Weise ist eine die Drallströmung nicht hemmende Kontur gegeben. Die Anfasungen an den Auslaßventilen bezüglich ihrer Größe und Richtung sind gleich ausgebildet und sie erstrecken sich vorzugsweise über einen Bogenwinkel von 210°. Die Ventile sind vorzugsweise geneigt zur Ebene des Zylinderkopfbodens angeordnet, so daß die Ventilschäfte von Einlaß- und Auslaßventil V-förmig zueinander ausgerichtet sind.

Ausführungsbeispiele der Erfindung sind nachstehend anhand der Zeichnung näher erläutert. In der Zeichnung zeigt:
- Fig. 1: eine perspektivische Darstellung der Einlaßkanäle eines Zylinders für einen Motor mit vier Ventilen pro Zylinder,
- Fig. 2: die Draufsicht auf eine Anordnung gemäß Fig. 1,
- Fig. 3: eine Ansicht in Richtung des Pfeiles III in Fig. 2,
- Fig. 4: einen Schnitt durch ein erstes Einlaßventil entlang der Linie IV - IV in Fig. 2,
- Fig. 5: einen Schnitt durch ein zweites Einlaßventil entlang der Linie V - V in Fig. 2,
- Fig. 6: einen Ausschnitt der Ansicht auf den Zylinderkopfboden mit den Ventilen.

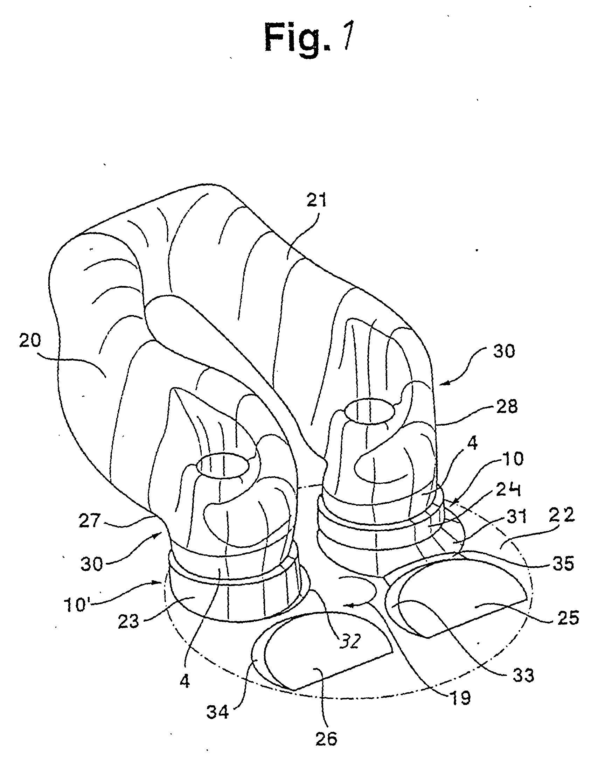

Die Fig. 1 zeigt eine perspektivische Ansicht zweier Einlaßkanäle 20, 21 eines Zylinders für einen Vierventilmotor. Dabei sind im Zylinderkopfboden 22 zwei Einlaßventile 10, 10' mit entsprechenden Ventilsitzen 23, 24 sowie zwei Auslaßventile vorgesehen, von denen lediglich die jeweiligen Abschnitte der im Zylinderkopfboden ausgebildeten Öffnungen 25, 26 dargestellt sind. Daß diese Öffnungen 25, 26 lediglich einen Kreisabschnitt darstellen, ist dadurch bedingt, daß die Ventile geneigt zum Zylinderkopfboden angeordnet sind und teilweise die entsprechenden Ventilsitzringe aus der Ebene des Zylinderkopfbodens hervorstehen. Die Einlaßkanäle 20, 21 verlaufen im Abstand über den Ventilsitzen 23, 24 in Richtung auf den Zylinder. Bei geöffneten Einlaßventilen 10, 10' erfolgt das Einströmen der Luft in den Zylinder mit einer Drallströmung gemäß Pfeil 19.

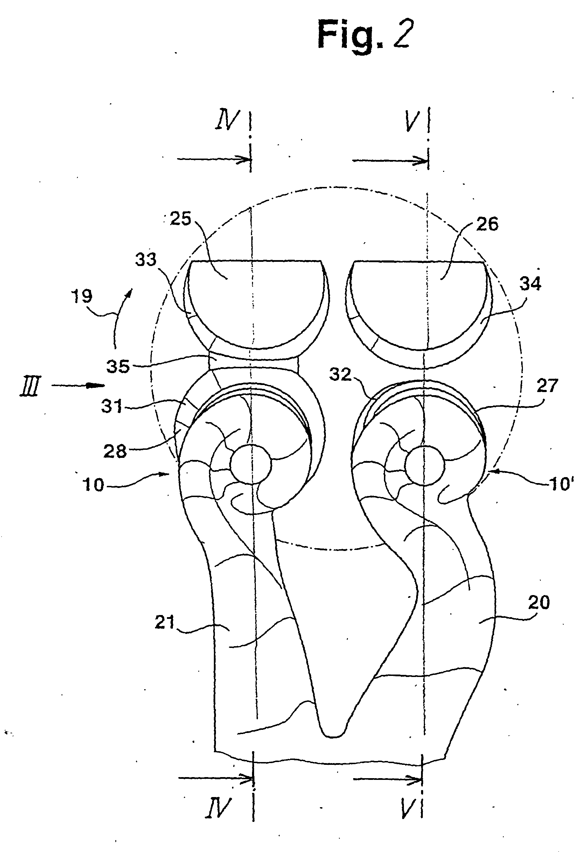

An den Ventilsitzen 23, 24 sind im Zylinderkopfboden 22 exzentrische Anfasungen 31, 32 vorgesehen, die sich sichelförmig um die jeweiligen Ventilöffnungen erstrecken. Außerdem sind an den Öffnungen 25, 26 für die Auslaßventile Anfasungen 33 und 34 vorgesehen, die ebenfalls exzentrisch zu den Öffnungen 25, 26 verlaufen. Die Form und Lage dieser Anfasungen 31 bis 34 ist insbesondere aus Fig. 2 ersichtlich. An dem in Drallrichtung 19 vorderen Einlaßventil 10 ist die Anfasung 31 vorgesehen, die sich über einen Bogenwinkel von ca. 240° erstreckt, wobei die größte Breite der Sichel der Öffnung 25 des benachbarten Auslaßventils zugewandt ist. Die an dem Ventilsitz des in Drallrichtung nachgeordneten Einlaßventils 10' angeordnete sichelförmige Anfasung 32 reicht lediglich über einen Winkel von ca. 90° und besitzt eine wesentlich geringere Breite als die Anfasung 31 am Einlaßventil 10. Die Anfasung 32 ist so angeordnet, daß sie mit ihrer größten Breite der Öffnung 25 zugewandt ist, die dem Einlaßventil 10' diagonal gegenüberliegt.

An den Öffnungen 25 und 26 der beiden Auslaßventile sind die Anfasungen 33 und 34 vorgesehen, die bezüglich ihrer Größe und Richtung exakt gleich ausgebildet sind. Dabei ist die Form ebenfalls eine Sichel, die sich über ca. 210° erstreckt und mit ihrer größten Breite auf das jeweils benachbarte Einlaßventil 10, 10' gerichtet ist. Aufgrund der relativ geringen Anfasung 32 und deren Richtung verbleibt zwischen den Anfasungen 32 und 34 ein Abstand; dagegen grenzen die Anfasungen 31 und 33 an den breitesten Ausdehnungen der Sicheln aneinander und bilden zwischen sich einen stegartigen Übergangsbereich 35. Die Hauptströmungsrichtungen, in denen die Verbrennungsluft aus den Einlaßventilen 10 und 10' in den Zylinder eintritt, ist mit Pfeilen 6 und 16 angegeben. Im übrigen stimmen die Bezugszeichen der Fig. 2 für gleiche Teile mit denjenigen der Fig. 1 überein.

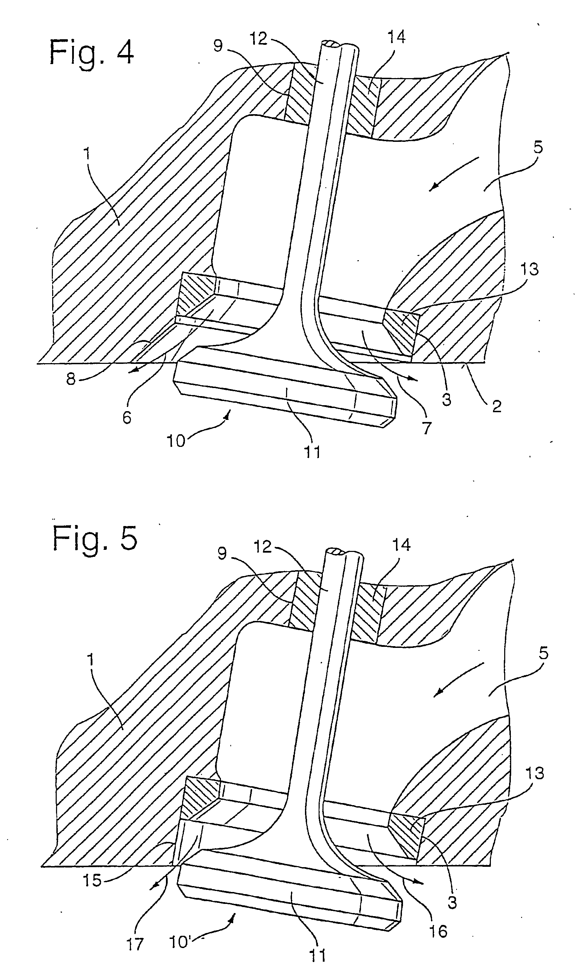

In Fig. 3, die eine Ansicht in Richtung des Pfeiles III der Fig. 2 zeigt, ist lediglich das Einlaßventil 10 mit dem Einlaßkanal 21 zu sehen; das weitere Einlaßventil, mit dem diesem zugeordneten Einlaßkanal 20 ist verdeckt. Die Längsachse des Ventilschaftes der Einlaßventile, die durch Linie 41 bezeichnet ist, verläuft in einem Winkel zur Senkrechten auf dem Zylinderkopfboden 22 stehenden Achse 30 und im gleich großen Winkel, jedoch zur anderen Seite geneigt, verläuft die Längsachse des Ventilschaftes der Auslaßventile, wie dies mit der Linie 42 angegeben ist. Daraus wird deutlich, daß die Einlaßventile zu den Auslaßventilen V-förmig angeordnet sind.

In der Fig. 4 ist der Längsschnitt durch das Einlaßventil 10 entlang der Linie IV - IV in Fig. 2 gezeigt. In dem Zylinderkopf 1 befindet sich an dem Zylinderkopfboden 2 eine Ausnehmung 3, in der ein Ventilsitzring 13 eingesetzt ist. In einer Bohrung 9 im Zylinderkopf 1 ist eine Führungshülse 14 angeordnet, in welcher ein Ventilschaft 12 des Einlaßventils 10 längsverschieblich geführt ist. Am unteren Ende des Ventilschaftes 12 ist ein Ventilteller 11 angeformt, der mit dem Ventilsitzring 13 im Sinne eines schließbaren Durchlasses zusammenwirkt.

Die Ebenen des Ventiltellers 11 sowie auch des Ventilsitzringes 13 sind - bezogen auf den Zylinderkopfboden - geneigt angeordnet, so daß der Rand des Ventiltellers in einem Bereich über den Zylinderkopfboden 2 hervorsteht und in einem anderen Bereich im Zylinderkopfboden 2 versenkt ist. An der Ausnehmung 3 ist eine exzentrische Anfasung 8 vorgesehen, und zwar auf der Seite, an der der Ventilteller 11 im Zylinderkopfboden 2 versenkt ist. Zu dem Einlaßventil 10 führt ein im Zylinderkopf 1 angeordneter Einlaßkanal 5.

Die Darstellung in Fig. 4 zeigt das Einlaßventil 10, in geöffnetem Zustand, d. h. der Ventilteller 11 ist vom Ventilsitzring 13 abgehoben. Aufgrund der Richtung des Einströmkanals 5 und der exzentrischen Anfasung 8 ergibt sich eine bevorzugte Ausströmung der Verbrennungsluft in Richtung des Pfeiles 6, wohingegen ein geringerer Strömungsanteil in Richtung des Pfeiles 7 durch das Einlaßventil 10 tritt.

In der Fig. 5 ist der Schnitt durch das Einlaßventil 10' entlang der Linie V - V der Fig. 2 gezeigt. Dieses Einlaßventil 10' entspricht im Aufbau grundsätzlich dem Einlaßventil 10 der Fig. 4, es ist jedoch an der Ausnehmung 3 keine Anfasung vorgesehen, sondern eine sich bis zu dem Zylinderkopfboden 2 erstreckende Abdeckung 15. Durch diese Abdeckung 15 wird bei einem Abheben des Ventiltellers 11 von dem Ventilsitzring 13 zunächst lediglich ein Spalt in dem Bereich des Ventilsitzringes 13 geöffnet, der dem Zylinderkopfboden 2 benachbart ist. Der Ventilteller 11 ist an seinem anderen Bereich durch die Sitzabdeckung 15 abgedeckt, so daß die Einströmung der Verbrennungsluft bis zu einem bestimmten Ventilhub ausschließlich in Richtung des Pfeiles 16 erfolgt. Erst bei einem größeren Ventilhub, bspw. von mehr als 50% des maximalen Ventilhubs, ist der Ventilteller 11 über die Sitzabdeckung 15 hinaus verschoben, so daß dort ein Spalt entsteht, der jedoch wesentlich geringer ist als auf der anderen Seite des Ventiltellers. Auf diese Weise ergibt sich an dem Einlaßventil 10' eine Hauptströmung gemäß dem Pfeil 16 und ein lediglich unbedeutender Strömungsanteil auf der Seite der Sitzabdeckung 15, der mit dem Pfeil 17 bezeichnet ist.

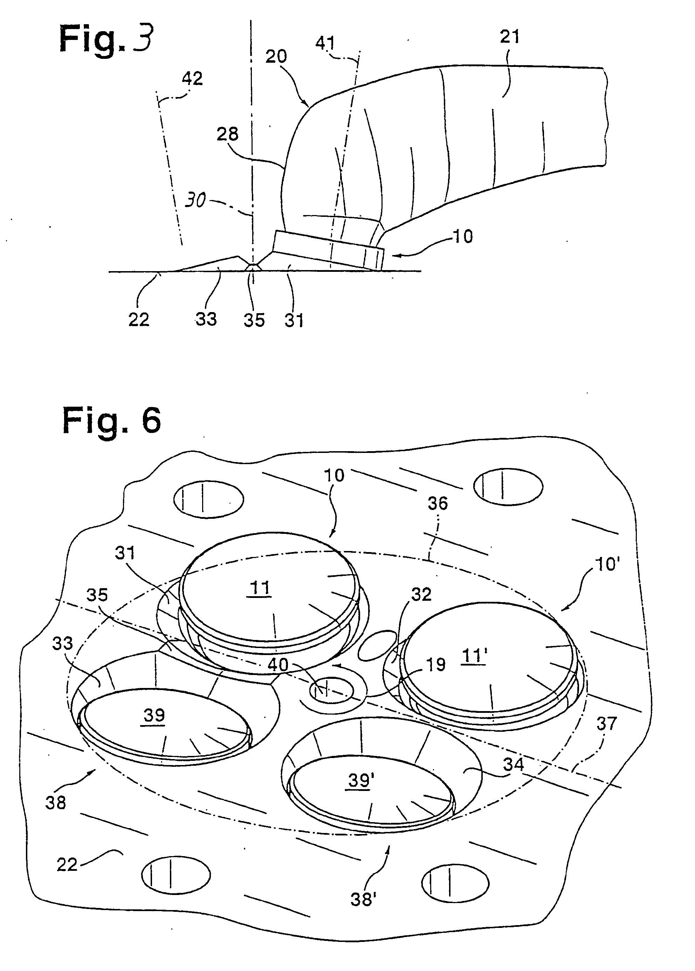

In Fig. 6 ist ein Ausschnitt einer Ansicht des Zylinderkopfbodens 22 für einen Motor mit vier Ventilen je Zylinder gezeigt. In je einem Quadrant der Kreisfläche des Zylinders 36 befindet sich ein Ventil, wobei - bezogen auf eine Querachse 37 - auf einer Seite die Einlaßventile 10, 10' und auf der anderen Seite die Auslaßventile 38, 38' angeordnet sind. Während die Einlaßventile 10, 10' geöffnet sind, indem die Ventilteller 11, 11' von den jeweiligen Ventilsitzen abgehoben sind, befinden sich Ventilteller 39, 39' auf den jeweiligen Ventilsitzen, so daß die Auslaßventile 38, 38' ihre Schließstellung einnehmen. Aus der Darstellung in Fig. 6 ist auch deutlich der Verlauf der Anfasungen 31 bis 34 sowie der Übergangsbereich 35 zu erkennen. Im Zentrum der Kreisfläche des Zylinders 36 ist im Zylinderkopf zwischen den Ventilen 10, 10'; 38, 38' eine Öffnung 40 für eine nicht dargestellte Einspritzdüse vorgesehen. Der Pfeil 19 bezeichnet die Drallrichtung der durch die Einlaßventile 10, 10' eintretenden Luft.

## Patentansprüche

1. Zylinderkopf (1) für eine Brennkraftmaschine mit zwei Einlassventilen (10,10') und zwei Auslassventilen (38,38') je Zylinder (36) der Brennkraftmaschine, mit einer Querachse (37), auf deren einer Seite die Einlassventile (10, 10') und auf deren anderer Seite die Auslassventile (38, 38') angeordnet sind, sowie mit einer Einrichtung (31, 15) zur Erzeugung einer Drallströmung um die Zylinderhochsachse (30), wobei das in Drallrichtung (19) gesehen vordere Einlassventil (10) im Bereich seines Ventilsitzes (24) mit einer exzentrischen, sichelförmigen Anfasung (31) versehen ist, die sich im wesentlichen derart über einen Bogenwinkel zur Querachse (37) hin erstreckt, dass sie mit ihrer größten Breite auf das benachbarte Auslassventil (38) gerichtet ist, wobei ferner an dem anderen, in Drallrichtung (19) nachgeordneten Einlassventil (10') an dem Ventilsitz (23) eine exzentrische Anfasung (32) und eine Sitzabdeckung (15) vorgesehen ist, und wobei die Auslassventile (39,39') mit einer Anfasung versehen sind,
**dadurch gekennzeichnet,**
**dass** die Anfasung des nachgeordneten Einlassventils (10') wesentlich kleiner ausgebildet ist, als die Anfasung des vorderen Einlassventils (10),
**dass** die Sitzabdeckung (15) am nachgeordneten Einlassventil (10') an seinem der Querachse (37) benachbarten Bereich des Ventilsitzes (23) angeordnet ist,
**dass** beide Auslassventile (38,38') jeweils eine dem benachbarten Einlassventil (10,10') zugewandte exzentrische Anfasung (33,34) aufweisen,
und **dass** die Anfasungen (33,34) an den Auslassventilen (38,38') bezüglich ihrer Größe und Richtung gleich ausgebildet sind und sich vorzugsweise über einen Bogenwinkel erstrecken.

2. Zylinderkopf nach Anspruch 1,
**dadurch gekennzeichnet,**
**dass** die Anfasungen an den Auslassventilen (38,38') die Form einer Sichel aufweisen, die sich über ca. 210° erstreckt, wobei die jeweils größte Breite der Sichel auf das jeweils benachbarte Einlassventil (10,10') gerichtet ist.

3. Zylinderkopf nach Anspruch 1 oder 2,
**dadurch gekennzeichnet,**
**dass** die Anfasungen (31, 33) des in Drallrichtung vorderen Einlassventils (10) und des benachbarten Auslassventils (38) aneinandergrenzen und zwischen sich einen stegartigen Übergangsbereich (35) bilden.

4. Zylinderkopf nach einem der vorhergehenden Ansprüchen,
**dadurch gekennzeichnet,**
**dass** die Anfasung des vorderen Einlassventils (10) sich über einen Bogenwinkel von ca. 240° erstreckt.

5. Zylinderkopf nach einem der vorhergehenden Ansprüchen,
**dadurch gekennzeichnet,**
**dass** die Anfasung des in Drallrichtung nachgeordneten Einlassventils (10') einen Bogenwinkel von ca. 90° aufweist und mit ihrer größten Breite auf das diagonal benachbarte Auslassventil oder auf das benachbarte Einlassventil gerichtet ist.

6. Zylinderkopf nach einem der vorhergehenden Ansprüchen,
**dadurch gekennzeichnet,**
**dass** die Anfasung derart bemessen ist, dass sie vorzugsweise bei kleinen Ventilhüben für die Strömung wirksam ist.

7. Zylinderkopf nach Anspruch 1,
**dadurch gekennzeichnet,**
**dass** die Sitzabdeckung (15) eine Höhe aufweist, die mindestens 10% des maximalen Ventilhubs beträgt.

## Claims

1. A cylinder head (1) for an internal combustion engine with two intake valves (10, 10') and two exhaust valves (38, 38') per cylinder (36) in the internal combustion engine, with a transverse axis (37) on one side of which the intake valves (10, 10') are arranged and on the other side of which the exhaust valves (38, 38') are arranged, and with a device (31, 15) for generating a swirl flow about the vertical axis (30) of the cylinder wherein the first intake valve (10) seen in the direction of swirl is provided in the area of its valve seat (24) with an excentric, sickle-shaped chamfered area (31) which extends around a certain angle of a circle in relation to the transverse axis (37) in such a manner that its widest part faces the neighbouring exhaust valve (38) wherein furthermore an excentric chamfered area (32) and a seat cover (15) are provided on the other, second intake valve (10') in the direction of swirl (19) on the valve seat (23) and wherein the exhaust valves (39, 39') are provided with a chamfered area,
**characterised in that**
the chamfered area of the second intake valve (10') is considerably smaller than the chamfered area of the first intake valve (10),
**in that** the seat cover (15) is arranged on the second intake valve (10') on the area of the valve seat (23) neighbouring the transverse axis (37),
**in that** each of the two exhaust valves (38, 38') has an excentric chamfered area (33, 34) facing the neighbouring intake valve (10, 10'),
and **in that** the chamfered areas (33, 34) on the exhaust valves (38, 38') are identical in terms of their size and direction and preferably extend around a certain angle of a circle.

2. Cylinder head according to claim 1,
**characterised in that**
the chamfered areas on the exhaust valves (38, 38') are in the shape of a sickle which extends around approx. 210° wherein the widest part of the sickle faces the neighbouring intake valve (10, 10') in each case.

3. Cylinder head according to claim 1 or 2,
**characterised in that**
the chamfered areas (31, 33) of the first intake valve (10) seen in the direction of swirl and of the neighbouring exhaust valve (38) are adjoining and form a web-like transition area (35) between them.

4. Cylinder head according to one of the preceding claims,
**characterised in that**
the chamfered area of the first intake valve (10) extends around an angle of approx. 240° of a circle.

5. Cylinder head according to one of the preceding claims, **characterised in that**
the chamfered area of the second intake valve (10') in the direction of swirl has an angle of approx. 90° of a circle and its widest part faces the diagonally neighbouring exhaust valve or the neighbouring intake valve.

6. Cylinder head according to one of the preceding claims,
**characterised in that**
the chamfered area is dimensioned such that it effects the flow preferably at small valve lifts.

7. Cylinder head according to claim 1,
**characterised in that**
the height of the seat cover (15) corresponds to at least 10% of the maximum valve lift.

## Revendications

1. Culasse (1) pour un moteur à combustion interne avec deux soupapes d'admission (10, 10') et deux soupapes d'échappement (38, 38') pour chaque cylindre (36) du moteur à combustion interne, comportant un axe transversal (37) sur l'un des côtés duquel sont agencées les soupapes d'admission (10, 10') et sur l'autre côté duquel sont agencées les soupapes d'échappement (38, 38'), et comportant un dispositif (31, 15) pour générer un écoulement rotationnel autour de l'axe vertical (30) du cylindre, dans laquelle la soupape d'admission (10) antérieure vue en direction rotationnelle (19) est pourvue, dans la zone de son siège de soupape (24); d'un chanfrein excentrique (31) en forme de croissant qui s'étend sur un angle d'arc vers l'axe transversal (37) sensiblement de telle sorte qu'il est dirigé par sa largeur maximale vers la soupape d'échappement voisine (38), et l'autre soupape d'admission (10') agencée en aval en direction rotationnelle (19) est pourvue, au niveau du siège de soupape (23), d'un chanfrein excentrique (32) et d'un recouvrement de siège (15), et les soupapes d'échappement (38, 38') sont pourvues d'un chanfrein,
**caractérisée en ce que**
le chanfrein de la soupape d'admission (10') agencée en aval est réalisé de manière sensiblement plus petite que le chanfrein de la soupape d'admission (10) agencée en amont,
le recouvrement de siège (15) sur la soupape d'admission (10') agencée en aval est agencé sur la région de son siège de soupape (23) voisine de l'axe transversal (37),
les deux soupapes d'échappement (38, 38') comportent chacune un chanfrein (33, 34) excentrique tourné vers la soupape d'admission voisine (10,10'), et
les chanfreins (33, 34) sur les soupapes d'échappement (38, 38') sont réalisés identiques quant à leur taille et à leur direction et s'étendent de préférence sur un angle d'arc.

2. Culasse selon la revendication 1,
**caractérisée en ce que**
les chanfreins sur les soupapes d'échappement (38, 38') ont la forme d'un croissant qui s'étend sur environ 210°, et la plus grande largeur respective des croissants est dirigée vers la soupape d'admission (10, 10') voisine respective.

3. Culasse selon la revendication 1 ou 2,
**caractérisée en ce que**
les chanfreins (31, 33) de la soupape d'admission (10) agencée en amont en direction rotationnelle (10) et de la soupape d'échappement (38) voisine sont mutuellement adjacentes et forment entre elles une zone de transition (35) en forme de barrette.

4. Culasse selon l'une des revendications précédentes,
**caractérisée en ce que**
le chanfrein de la soupape d'admission (10) amont s'étend sur un angle d'arc d'environ 240°.

5. Culasse selon l'une des revendications précédentes,
**caractérisée en ce que**
le chanfrein de la soupape d'admission (10') agencée en aval en direction rotationnelle présente un angle d'arc d'environ 90° et est orienté par sa plus grande largeur vers la soupape d'échappement voisine en diagonale ou vers la soupape d'admission voisine.

6. Culasse selon l'une des revendications précédentes,
**caractérisée en ce que**
le chanfrein a une dimension telle qu'il présente une efficacité vis-à-vis de l'écoulement, de préférence à des faibles levées de soupape.

7. Culasse selon la revendication 1,
**caractérisée en ce que**
le recouvrement de siège (15) présente une hauteur qui s'élève à au moins de 10 % de la levée de soupape maximum.
